# EUROPEAN PATENT APPLICATION

(11) **EP 0 894 991 A2**
(43) Date of publication of application: **03.02.1999**
(21) Application number: 98850123.5
(22) Date of filing: 27.07.1998
(51) Int. Cl.: F16C 35/07

(54) **Device for fixing a bearing on a shaft and/or to a machine element**

(30) Priority: 31.07.1997 SE 9702836
(71) Applicant: Aktiebolaget SKF, S-415 50 Göteborg (SE)
(72) Inventor: Manne, Nils, 418 72 Götenborg (SE); Johansson, Per-Olof, 444 65 Jörlanda (SE)
(74) Representative: Westman, P. Börje I.

(57) **Abstract**

A device for fixing a bearing (1) on a shaft and/or to a machine element is suggested. It is characterized in, that the bore surface (5) of the inner ring and/or the outer envelope surface (3) of the outer ring of said bearing (1) is prepared with an adhesive (2), said adhesive (2) having a cover of a curing obstructing material (4), said curing obstructing material (4) is arranged to be removed in connection to mounting of said bearing (1) on said shaft and/or to said machine element, and said bearing (1) being arranged to be fixed by curing of said adhesive (2) after mounting of said bearing.

## Description

### TECHNICAL FIELD

The present invention relates to a device for fixing a bearing on a shaft and/or to a machine element.

### BACKGROUND OF THE INVENTION

There are several ways of fixing bearings in the prior art. One of these is to glue the bearing to a shaft or to a machine element. The glue is normally applied on the bore surface of the inner ring and/or the outer envelope surface of the outer ring of the bearing shortly before the installation. Thus, the application is normally performed on site. A problem is to know the suitable amount of adhesive to apply. If the amount is too small then the fixing will not be strong enough risking great operational problems. If the amount is too large then there is a risk of adhesive excess, both in cured and not cured state, disturbing the operation of the bearing since the excess is at risk to come in contact with the race surfaces and the rollers in the bearing, which can cause severe operational problems. An example of a problem is lubrication failure, negative chemical effects on the bearing and the possible risk of damages on the rollers and the envelope surfaces of the inner and outer rings.

In EP-A1-620 633 a motor is presented which comprises a ball bearing which is fixed by an adhesive. That motor presents a spindle on which is mounted the inner race of a ball bearing. An outer peripheral surface of an end of the spindle is formed into a knurled portion on which is mounted the inner race which is fixed to the spindle through an adhesive filling out a clearence between the inner surface of the inner race and the knurled portion. An annular groove, formed in the spindle in an area adjacent to the knurled portion, is also filled with the adhesive to further fix the inner race to the spindle, which improves the adhesive bond between the inner race and the spindle.

### PURPOSE OF THE INVENTION AND ITS MOST CHARACTERISING PARTS

The purpose of the invention is to facilitate easier mounting and fixing of a bearing. Use of this invention when mounting and fixing results in a less problematic installation since the suitable amount of adhesive is placed on the relevant surfaces before the installation. Also by using the suitable amount of adhesive, i.e. not too much, decreases the risk of operational disturbances due to an excess of the adhesive, which can cause lubricational drawbacks.

Characteristics of the present invention are that the bore surface of the inner ring and/or the outer envelope surface of the outer ring of said bearing is prepared with an adhesive, said adhesive having a cover of a curing obstructing material, said curing obstructing material is arranged to be removed in connection to mounting of said bearing on said shaft and/or to said machine element, and that said bearing being arranged to be fixed by curing of said adhesive after mounting of said bearing.

### DESCRIPTION OF THE DRAWINGS

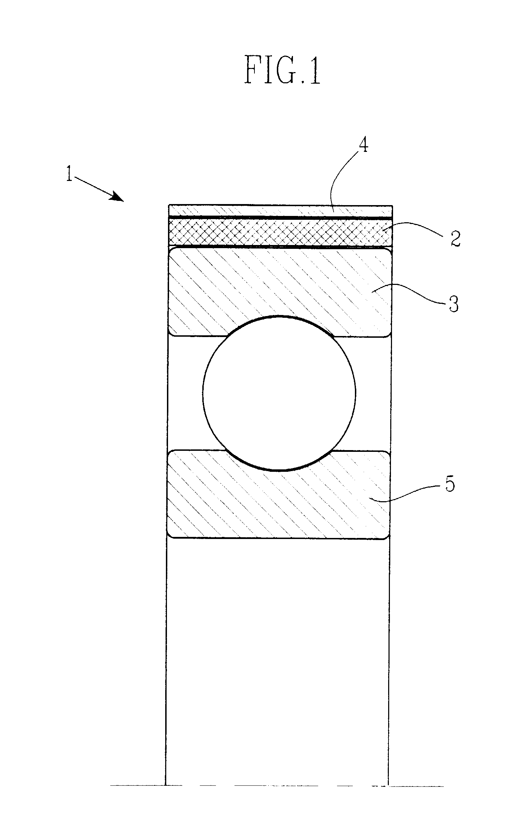

Figure 1 shows a sectional view of a part of a bearing provided with an adhesive, which is covered with a curing obstructing material.

### DESCRIPTION OF THE PREFERRED EMBODIMENT

In figure 1, a preferred embodiment is presented. It comprises a bearing 1 and a layer of an adhesive 2 arranged on the outer envelope surface 3. The adhesive 2 is in this embodiement a suitable adhesive paste, which is covered with a curing obstructing material 4. The curing obstructing material 4 is arranged to be removed at the mounting by scraping of said bearing 1 against a machine element, to which the bearing 1 is to be mounted. In the case the bearing 1 is to be mounted on a shaft, the adhesive is applied to the bore surface of the inner ring 5 and there it is covered with a curing obstructing material. It is possible to remove the curing obstructing material 4 by hand or by a suitable tool prior to the installation. The curing obstructing material 4 can be a film, e.g. of a plastic material, or a second layer of a suitable paste. The adhesive 2 and the curing obstructing material 4 are normally applied at the manufacture of the bearing 1, but it can also be applied shortly before the installation. Also, the curing obstructing material 4 is preferably removed at the installation site. It should be noted that the purpose of the invention can be achieved without a curing obstructing material 4 in the form of a film layer to be scraped off, and by using a suitable paste. The curing obstructing material 4 can consist of a casing preventing the adhesive 2 from curing. The casing can consist of a sleeve which is to be removed before the fitting. Another solution is to use a sleeve-like object, which is pushed off the adhesive 2 when the bearing is being mounted. As the object is being pushed off the adhesive 2 starts to cure.

## Claims

1. Device for fixing a bearing (1) on a shaft and/or to a machine element,
**characterized in**,
that the bore surface (5) of the inner ring and/or the outer envelope surface (3) of the outer ring of said bearing (1) is provided with an adhesive (2),
said adhesive (2) having a cover of a curing obstructing material (4),
said curing obstructing material (4) is arranged to be removed in connection to mounting of said bearing (1) on said shaft and/or to said machine element, and
said bearing (1) being arranged to be fixed by curing of said adhesive (2) after mounting of said bearing.

2. Device according to claim 1,
**characterized in,**
that said curing obstructing material (4) is arranged to be removed at the mounting by scraping it off from said bearing (1) against said shaft and/or said machine element.

3. Device according to claim 1,
**characterized in**,
that said curing obstructing material (4) consists of a removable casing.

4. Device according to claim 1,
**characterized in**,
that said adhesive (2) is an adhesive paste.

5. Device according to claim 1,
**characterized in**,
that said curing obstructing material (4) is a film, e.g. of a plastic material, or a second layer of a suitable paste.

6. Device according to claim 1,
**characterized in**,
that said adhesive (2) and said curing obstructing material (4) are applied at the manufacture of said bearing.
